(19)

Europäisches
Patentamt
European
Patent Office
Office européen
des brevets

(11)　**EP 3 772 978 B1**

(12)　　　　　　　　**EUROPEAN PATENT SPECIFICATION**

(45) Date of publication and mention
of the grant of the patent:
**13.04.2022 Bulletin 2022/15**

(21) Application number: **19707803.3**

(22) Date of filing: **28.02.2019**

(51) International Patent Classification (IPC):
*A23G 9/22* (2006.01)　　　*A23G 9/28* (2006.01)

(52) Cooperative Patent Classification (CPC):
**A23G 9/22; A23G 9/28; A23G 9/283**

(86) International application number:
**PCT/EP2019/055064**

(87) International publication number:
**WO 2019/185293 (03.10.2019 Gazette 2019/40)**

(54) **METHOD FOR DISPENSING FROZEN CONFECTIONS**

VERFAHREN ZUR ABGABE VON EISKONFEKT

PROCÉDÉ DE DISTRIBUTION DE CONFISERIES CONGELÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2018 EP 18165171**

(43) Date of publication of application:
**17.02.2021 Bulletin 2021/07**

(73) Proprietor: **Unilever IP Holdings B.V.
3013 AL Rotterdam (NL)**

(72) Inventors:
• **DIKS-WARMERDAM, Leonie, Martine
3133 AT Vlaardingen (NL)**

• **DOMBURG, Bastiaan
3132 BD Vlaardingen (NL)**
• **KRIEG, Johannes
3133 AT Vlaardingen (NL)**

(74) Representative: **Askew, Sarah Elizabeth
Unilever PLC
Unilever Patent Group
Bronland 14
6708 WH Wageningen (NL)**

(56) References cited:
**EP-A1- 1 386 542　　WO-A1-95/16634
US-A- 4 721 237　　US-A- 5 826 746
US-A- 5 921 435**

Printed by Jouve, 75001 PARIS (FR)

## Description

### Field of the invention

The present invention relates to methods for dispensing frozen confections from a portable dispenser. The invention more particularly relates to such methods wherein the dispenser dispenses frozen confections from individual containers.

### Background of the invention

Portable dispensers for ice cream have been proposed for some time. In particular portable dispensers have been proposed for dispensing ice cream from individual containers such as single dose cartridges.

EP 1 386 542 A1 discloses dispensing frozen aerated edible product from single dose cartridges containing said frozen aerated edible product, using a portable dispenser comprising thermally insulated storing means for storing single dose cartridges containing said frozen aerated edible product, said thermally insulated storing means being adapted to be mounted on the back of a person, and dispensing means capable of holding a single dose cartridge containing said frozen aerated edible product outside the storing means, said dispensing means comprising discharge means capable of discharging frozen aerated edible product out of said single dose cartridge.

In one embodiment, the dispenser disclosed in EP 1 386 542 A comprises a cartridge cascade mechanism and a cooling means such as plastic containers filled with a suitable phase change material. Where these are used, the cooling means are described as being introduced to the storing means after putting the cascade mechanism in place.

The present inventors have now recognized that there is a need for improvements in methods for dispensing frozen confections from a portable dispenser. In particular the inventors have recognized a need for methods that improve the length of time at which the containers stored in the dispenser can be maintained at a suitable temperature and thus increase the length of time a vendor can travel around with the dispenser without having to return to a storage freezer or the like.

The present inventors have found that by providing a cassette for holding the containers and pre-cooling the cassette, increased thermal durability of the dispenser can be achieved.

### Summary of the invention

In a first aspect, the present invention is directed to a method for dispensing frozen confections from containers from a portable dispenser, the dispenser comprising:

- a thermally insulated housing; and
- a cassette for holding the containers, receivable in the thermally insulated housing and adapted to deliver individual containers, the cassette comprising a frame and one or more packets of phase-change material;

wherein the method comprises the steps of:

(i) cooling the cassette to a storage temperature of less than -10°C;
(ii) loading the cassette with the containers;
(iii) enclosing the loaded cassette within the housing; and
(iv) delivering individual containers from the cassette.

The present inventors have found that by cooling the cassette to a low temperature, significant improvements in thermal robustness of the dispenser can be achieved compared to when only parts (for example packets of phase change material) are cooled.

Colder storage temperatures are preferred. Therefore, preferably the storage temperature is less than -12°C, more preferably in the range of from -27°C to -15°C.

Cooling of the cassette may be achieved, for example, by storing the cassette for a storage time of at least 2 hours in a freezer operating at or below (but preferably at) the storage temperature. Preferably the storage time is at least 4 hours, more preferably from 6 to 72 hours.

It is preferred that the cassette is stored at the storage temperature whilst already loaded with containers. In this way possible heating up of the cassette during the time of loading containers prior to installation in the housing is avoided. Thus preferably step (ii) is performed before step (i) and the loaded cassette is cooled to the storage temperature.

Preferably the cassette is self-standing and can securely hold the containers even when not installed in the housing.

The cassette comprises a frame and one or more packets of phase-change material mounted on the frame. The packets may be removeable from the frame and so cooled separately. In other words, the packets may be removably mounted on the frame. Preferably the whole cassette including the packets are cooled in a pre-assembled form to avoid any heating during the time needed for assembly.

Preferably the cassette comprises a cascade mechanism for delivering individual containers to one or more access openings located towards a base of the housing. More preferably the cascade mechanism comprises guides to guide the containers in paths wherein each path extends to an access opening. More preferably still the paths comprise at least one inner path and one outer path extending to each access opening.

In one embodiment the cascade mechanism comprises at least one catch mechanism adapted to interrupt an outer path when in a closed position as this prevents jamming which may otherwise occur at the point where the inner path extending to the same access opening joins the outer path. Additionally or alternatively the catch mechanism may be adapted to interrupt an inner path.

The cassette preferably holds at least 10 containers, more preferably at least 20 and most preferably from 25 to 50.

The method of the present invention may be used for dispensing of a range of frozen confections such as ice cream, gelato, frozen yoghurt, sorbets, granitas, shaved ices and the like. Preferably the frozen confection is ice cream.

The frozen confection is preferably aerated. By "aerated" is meant that the confection has an overrun of at least 30%. More preferably the frozen aerated confection has an overrun of from 70 to 135%, most preferably from 80 to 110%.

Overrun (OR) is defined by the following Equation 1

$$OR = \frac{volume\,of\,frozen\,confection - volume\,of\,premix\,at\,ambient\,temp}{volume\,of\,premix\,at\,ambient\,temp} \times 100$$

(Equation 1)

It is measured at atmospheric pressure. Ambient temperature is 20°C.

Preferably the housing is adapted to be mounted on the back of a person. Additionally or alternatively the containers are single-dose cartridges and the dispenser comprises a discharge device capable of holding a single dose cartridge and discharging frozen confection from the cartridge. More preferably the device is adapted to be mounted on the front of the torso of a person.

Mounting the device on the torso of the person removes the need to hold the device during actuation and so leaves both hands of the person free for other activities. Furthermore, such mounting provides the opportunity for the actuator for the dispensing process to be accessible to a customer who can themselves start the dispensing process and thus become more engaged in the process.

Thus in a preferred embodiment the device comprises an actuator for activating the discharge device, the actuator being disposed on a surface of the device facing away from the person on which the device is mounted, more preferably the actuator is disposed on a front surface of the device. More preferably still the actuator is a button and the device is activated by a single press of the button. By "single press" is meant that by simply depressing and then immediately releasing the button the whole dispensing process is effected without having to hold the button during the dispensing process.

The single dose cartridges preferably comprise:

- a product compartment containing the frozen confection and having a product outlet, and
- a moveable wall through which a dispensing force can be transmitted to the frozen confection to urge it through the outlet. More preferably the cartridges comprise a cylindrical outer wall and a piston slideable within the outer wall and forming the moveable wall.

The device (when used) preferably comprises a plunger for applying the dispensing force to the moveable wall.

Each cartridge holds a single dose of frozen confection. Preferably the amount of frozen confection in each cartridge is from 50 to 200 g, more preferably from 60 to 175 g and most preferably from 70 to 150 g.

Except in the Examples, all numbers in this description indicating amounts of material, time periods, length scales, conditions of reaction, physical properties of materials and/or use may optionally be understood as modified by the word "about".

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention such disclosure is also to be considered to apply to any other aspect of the invention *mutatis mutandis.*

## Brief description of the drawings

The present invention will now be described with reference to the figures, wherein:

Figure 1 shows a schematic side view of an embodiment of a dispenser for use in the invention and mounted on a person.

Figure 2 shows a side view of the dispenser of Figure 1 before being mounted on the person.

Figure 3 shows a sectional view of the thermally-insulated housing and cassette of the dispenser shown in Figures 1 and 2.

Figure 4a shows a front view of the discharge device of the dispenser of Figures 1 and 2 holding a cartridge ready for discharge of the contents.

Figure 4b shows a back view of the dispenser and cartridge of Figure 4a.

Figure 4c shows a side view of the dispenser and cartridge of Figure 4a.

Figure 4d shows a sectional view of the dispenser of Figure 4c, taken through a plane containing line A-A.

## Detailed description

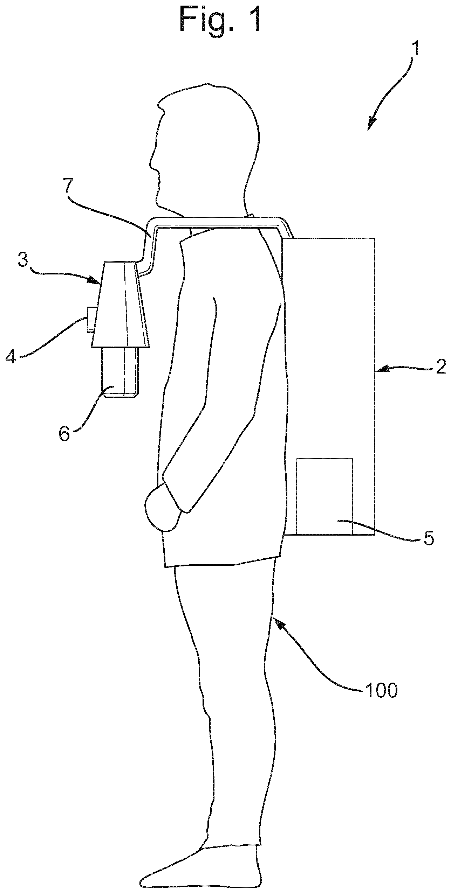

Figures 1 to 3 show a portable dispenser (1) for use in an embodiment of the invention and mountable on a person (100). The dispenser comprises a thermally-insulated backpack (2) and a discharge device (3).

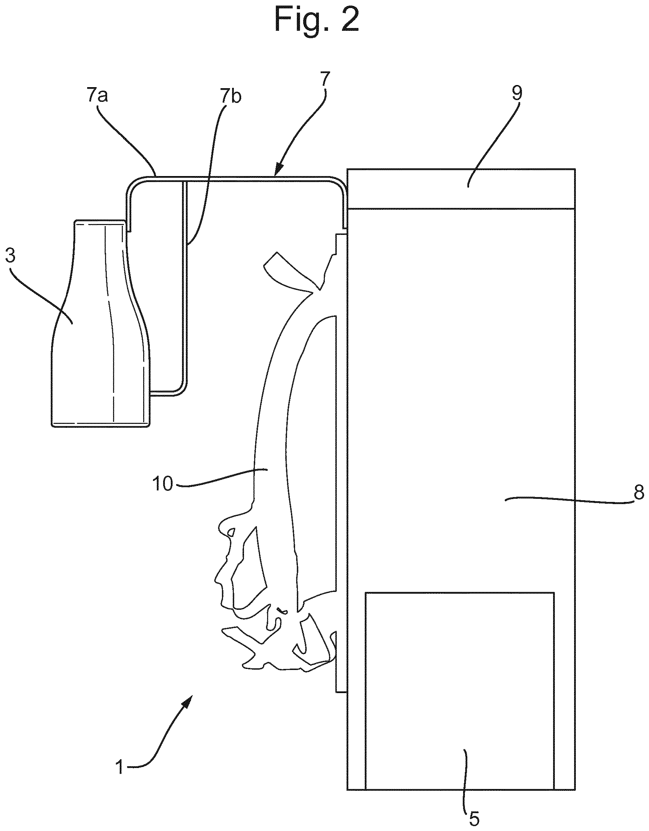

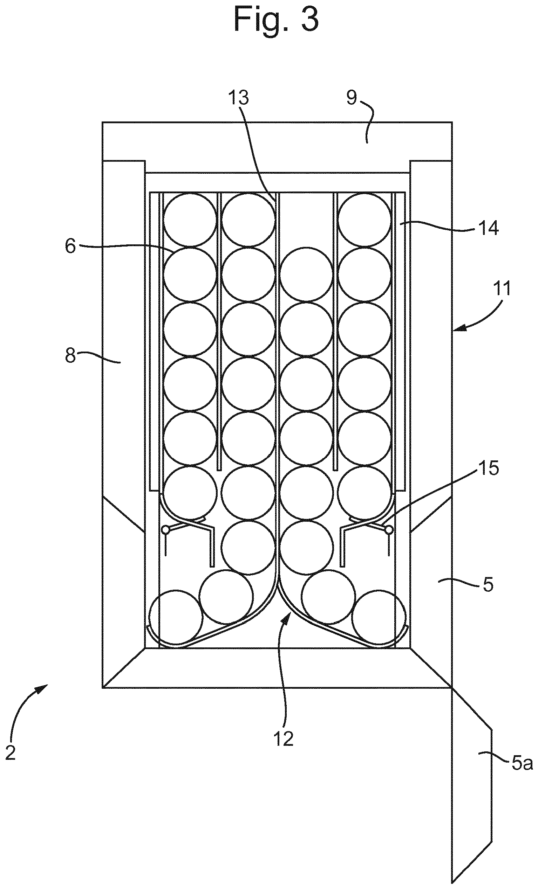

The backpack (2) is mounted on the back of the person (100) by means of a harness (10) which for clarity is omitted from Figure 1 but is shown in Figure 2. As best seen in Figure 3, the backpack comprises a thermally-insulated housing (11) which has a main housing body (8) comprising side walls and a base, and a lid (9). The housing (11) is made from thermally-insulating material such as polyurethane foam sandwiched between plastic sheets. Near the base of the housing body (8) and located on opposite sides thereof are two delivery ports (5) which are each closeable by insulated doors (5a). The lid (9) can be removable from the housing body (11) or is at least openable (e.g. in a hinged or similar manner) in order to allow access to the interior of the housing (11) to install or remove therefrom a cassette (12).

The cassette (12) is adapted to hold a plurality of single dose cartridges (6) which are preferably cylindrical. In a preferred embodiment the cassette (12) is adapted to not only hold the cartridges but also to guide delivery of the cartridges, one by one, to the delivery ports (5). The cassette (12) comprises a frame (13) which may be formed from a lightweight material such as plastic or aluminium and in the embodiment shown is shaped to hold and guide the cartridges (6) in four paths or stacks. Such cascade mechanisms have been disclosed for holding and delivering beverage containers and reference is made in particular to US 7,810,350 B2. The paths in the cassette frame (13) shown in present Figure 3 are arranged in a similar manner to those of US 7,810,350 but in the present embodiment, the two outermost paths are each interrupted by a catch-mechanism (15). The catch mechanism (15) prevents cartridges (6) in the outermost paths from entering the inner paths unless the mechanism is moved to an open position by a user.

The cassette preferably holds at least 10 cartridges, more preferably at least 20 and most preferably from 25 to 50.

The cassette (12) also comprises packets of phase change material (14), such as eutectic material, on outer surfaces of the frame (13) which assist in maintaining a cool temperature inside the housing (11). To better maintain the temperature of the interior of the housing it has been found advantageous to cool the whole cassette (12) prior to loading into the housing. Therefore the frame (13) and packets (14) of phase change material (14) are both cooled to a temperature of less than -10°C, more preferably less than -12°C and most preferably from -27°C to -15°C, before being inserted into the housing. Preferably the cooling of the frame (13) and packets (14) is achieved by storing them, preferably together, for at least 2 hours, more preferably at least 4 hours and most preferably from 6 to 72 hours in a freezer operating at or below the aforementioned temperature. Most preferably the cassette (12) is stored in the freezer with the packets (14) already assembled on the frame (13), even more preferably with the packets (14) assembled on the frame (13) and the frame (13) pre-loaded with cartridges (6) of frozen confection. Thus in a preferred embodiment the cassette (12) is self-standing and can securely hold the cartridges (6) even when not installed in the housing (11).

As best seen in Figures 1 and 2, the discharge device (3) is preferably suspended in front of the torso of the sales person (100) by means of a rigid support frame (7) which extends from the backpack (2) over the left shoulder of the person (100). The support may have one or more branches (7a, 7b) on which the device (3) is suspended.

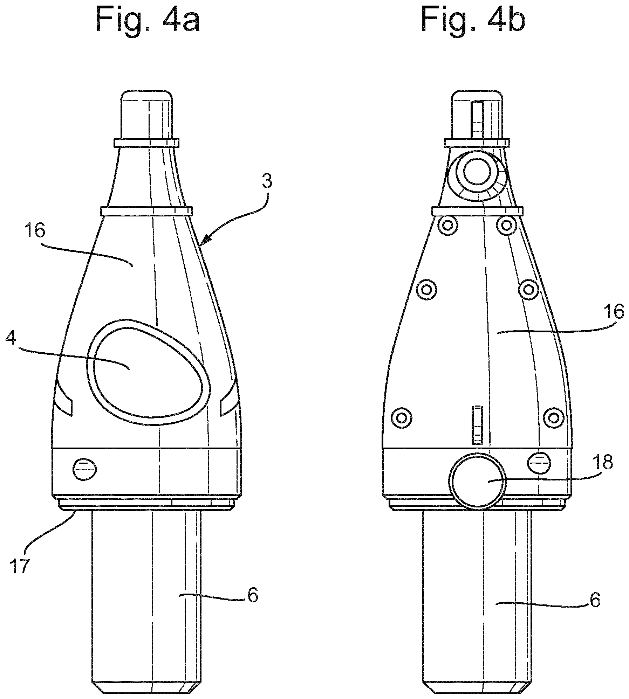

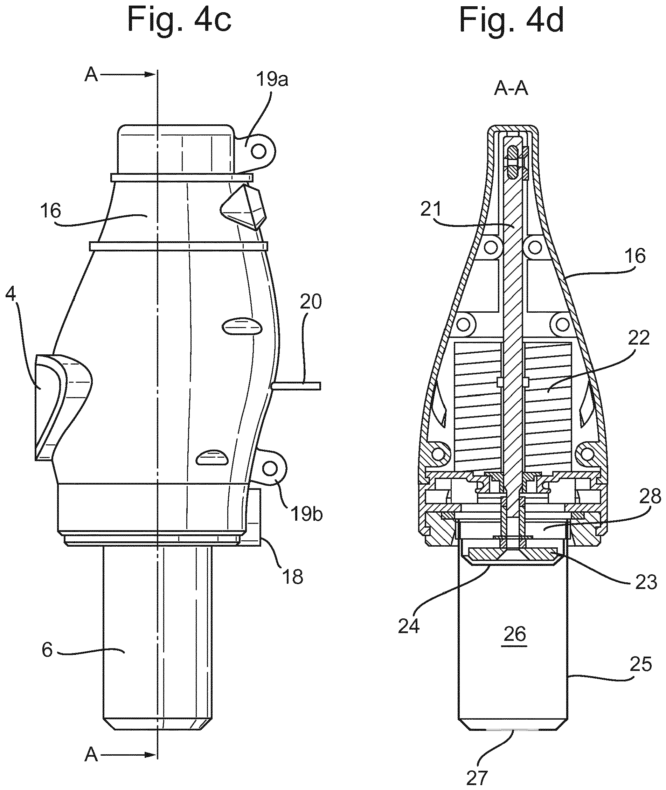

Further details of the device (3) are shown in Figures 4a to 4d. The device (3) comprises a casing (16) which is roughly in the shape of a truncated cone and at its larger, bottom end has an opening (17) shaped to receive the top end of a cartridge (6). On the front of the device is a button (4) for actuating the discharge of confection from the cartridge (6) and on the back of the device is a button (18) for actuating a mechanism for releasing a used cartridge (6) from the device (3).

In the embodiment shown, the cartridge (6) is of the piston-type and thus has an outer cylindrical wall (25) in which slides a piston (24). In a filled state, below the piston (24) is a product compartment (26) filled with frozen confection and extending to at bottom end of the cartridge (6) in which is located an orifice (27) which serves as the product outlet. Above the piston (24) at the top end of the cartridge (6) is an entrance opening (28) through which a plunger (23) of the device (3) can enter and apply a dispensing force on the piston (24) through which the force is transmitted to frozen confection in the product compartment (26) to urge the confection through the product outlet (27).

Within the device casing (16) are a drive motor (22) and a shaft (21). The shaft (21) is fixedly connected at its bottom end to the plunger (23) and passes through the motor in an arrangement that allows the motor (22) to translate the shaft (21) and therefore the plunger (23) in a linear downwards or upwards direction. When the plunger (23) is in a starting position, before discharge, substantially all of the shaft (21) and plunger (23) are withdrawn into the casing (16). The back of the casing (16) includes connectors (19a, 19b) on which the device (3) can be hung from the support (7). In the embodiment shown in Figure 4c, part of a power cable (20) for the motor is shown exiting the casing (16) as the battery (not shown) for powering the motor (22) is located in the backpack (2). Conveniently the path of the power cable between the device (3) and the backpack (2) follows that of the support frame (7) for example by threading the cable (2) inside the frame (7) or fixing it to an outer surface of the frame (7).

In use, the sales person (100) loads the frame (13) of a cassette (12) with pre-frozen cartridges (6) of frozen confection and (if not already attached) attaches the packets (14) of phase change material to the frame (13). The entire, loaded frame is then placed in a freezer for several hours until it has reached a temperature of approximately -18°C. The seller (100) then removes the lid (9) from the backpack (2), places the fully-loaded and cooled cassette (12) into the housing and replaces the lid (9) to achieve the arrangement as shown in Figure 3.

The seller (100) then puts the backpack (2) on as shown in Figure 1 with the support (7) extending over the seller's shoulder to suspend the device (3) in front of the seller's torso. The whole dispenser (1) is secured it in place with the harness (10).

The seller (100) then strolls to a location where potential consumers are located. On encountering a consumer wishing to buy a portion of frozen confection, the seller (100) opens one of the doors (5a) and takes a cartridge (6) from the delivery port (5), wherein the next cartridge (6) in the cassette (12) tumbles to the end of the path at the port (5). The seller (100) then installs the taken cartridge (6) in the device (3) and holds a receptacle (such as a cup or wafer cone) below the product outlet (27) and tells the consumer to push the discharge actuating button (4) whilst the seller (100) closes the door (5a) of the port with the seller's free hand.

On pushing the button (4) the motor (22) is activated and actuates the shaft (21) downwards thus translating the plunger (23) into the cartridge (6) and discharging the frozen confection into the receptacle. Meanwhile the seller (100) can use the free hand to process payment from the consumer.

When the contents of the cartridge (6) have been discharged into the receptacle, the seller (100) hands the filled receptacle to the consumer. At the same time the motor (22) reverses the direction of motion of the shaft (21), withdrawing the shaft (21) and plunger (23) into the casing. The seller then presses the cartridge release button (18) and removes the empty cartridge from the device (3), ready for insertion of a full cartridge (6) into the opening (17) at the bottom of the casing (16).

The vendor (100) can then repeat the process until all of the doses of frozen confection has been sold. Because the whole cassette was pre-cooled before insertion in the housing, the vending session can last for several hours without affecting the quality of the frozen confection.

**Claims**

**1.** A method for dispensing frozen confections from containers from a portable dispenser (1), the dispenser comprising:

- a thermally insulated housing (11); and
- a cassette (12) for holding containers (6), receivable in the thermally insulated housing (11) and adapted to deliver individual containers (6), wherein the cassette (12) comprises a frame (13) and one or more packets of phase-change material (14) mounted on the frame (13);

wherein the method comprises the steps of:

(i) cooling the cassette (12) to a storage temperature of less than -10°C;

(ii) loading the cassette (12) with the containers (6);
(iii) enclosing the loaded cassette within the housing (11); and
(iv) delivering individual containers (6) from the cassette (12).

2. The method as claimed in claim 1 wherein step (ii) is performed before step (i) and the loaded cassette is cooled to the storage temperature.

3. The method as claimed in claim 1 or claim 2 wherein the one or more packets of phase-change material (14) are removably mounted on the frame (13).

4. The method as claimed in any one of claims 1 to 3 wherein the cassette (12) comprises a cascade mechanism for delivering individual containers (6) to one or more access openings (5) located towards a base of the housing (11).

5. The method as claimed in claim 4 wherein the cascade mechanism comprises guides to guide the containers (6) in paths wherein each path extends to an access opening (5).

6. The method as claimed in claim 5 wherein at least one inner path and one outer path extend to each access opening (5).

7. The method as claimed in claim 6 wherein the cascade mechanism comprises at least one catch mechanism (15) adapted to interrupt an outer path when in a closed position.

8. The method as claimed in any one of claims 1 to 7 wherein the housing (11) is adapted to be mounted on the back of a person.

9. The method as claimed in any one of claims 1 to 8 wherein the containers (6) are single-dose cartridges and the dispenser additionally comprises a discharge device (3) capable of holding a single dose cartridge and discharging frozen confection from the cartridge.

10. The method as claimed in claim 9 wherein the device (3) is adapted to be mounted on the front of the torso of a person.

11. The method as claimed in any one of claims 1 to 10 wherein the storage temperature is less than -12°C.

12. The method as claimed in claim 11 wherein the storage temperature is in the range of from -27°C to -15°C.

13. The method as claimed in any one of claims 1 to 12 wherein step (i) comprises storing the cassette (12) for a storage time of at least 2 hours in a freezer operating at or below the storage temperature.

14. The method as claimed in claim 13 wherein the storage time is at least 4 hours.

15. The method as claimed in claim 14 wherein the storage time is from 6 to 72 hours.

**Patentansprüche**

1. Verfahren zum Ausgeben von gefrorenem Konfekt aus Behältern aus einem tragbaren Spender (1), wobei der Spender Folgendes umfasst:

• ein wärmeisoliertes Gehäuse (11); und
• eine Kassette (12) zum Halten von Behältern (6), die in dem wärmeisolierten Gehäuse (11) aufgenommen werden können, und die ausgelegt ist, einzelne Behälter (6) auszugeben, wobei die Kassette (12) ein Gestell (13) und eine oder mehrere Packungen Phasenänderungsmaterial (14) umfasst, die am Gestell (13) angebracht sind;

wobei das Verfahren die folgenden Schritte umfasst:

(i) Kühlen der Kassette (12) auf eine Lagerungstemperatur von weniger als -10 °C;
(ii) Füllen der Kassette (12) mit den Behältern (6);

(iii) Kapseln der gefüllten Kassette im Gehäuse (11); und

(iv) Ausgeben einzelner Behälter (6) aus der Kassette (12).

**2.** Verfahren nach Anspruch 1, wobei Schritt (ii) vor Schritt (i) ausgeführt wird und die gefüllte Kassette auf die Lagerungstemperatur gekühlt wird.

**3.** Verfahren nach Anspruch 1 oder 2, wobei die eine oder mehrere Packungen Phasenänderungsmaterial (14) am Gestell (13) abnehmbar angebracht sind.

**4.** Verfahren nach einem der Ansprüche 1 bis 3, wobei die Kassette (12) einen Kaskadenmechanismus zum Ausgeben einzelner Behälter (6) zu einer oder mehreren Zugriffsöffnungen (5), die sich an der Basis des Gehäuses (11) befinden, umfasst.

**5.** Verfahren nach Anspruch 4, wobei der Kaskadenmechanismus Führungselemente umfasst, um die Behälter (6) auf Pfaden zu führen, wobei jeder Pfad zu einer Zugriffsöffnung (5) verläuft.

**6.** Verfahren nach Anspruch 5, wobei zu jeder Zugriffsöffnung (5) wenigstens ein innerer Pfad und ein äußerer Pfad verlaufen.

**7.** Verfahren nach Anspruch 6, wobei der Kaskadenmechanismus wenigstens einen Einrastmechanismus (15) umfasst, der so ausgelegt ist, dass er einen äußeren Pfad unterbricht, wenn er in einer geschlossenen Position ist.

**8.** Verfahren nach einem der Ansprüche 1 bis 7, wobei das Gehäuse (11) so ausgelegt ist, dass es am Rücken einer Person angebracht werden kann.

**9.** Verfahren nach einem der Ansprüche 1 bis 8, wobei die Behälter (6) Einzeldosispatronen sind und der Spender zusätzlich eine Ausgabevorrichtung (3) umfasst, die eine Einzeldosispatrone halten kann und gefrorenes Konfekt aus der Patrone ausgeben kann.

**10.** Verfahren nach Anspruch 9, wobei die Vorrichtung (3) so ausgelegt ist, dass sie an der Vorderseite des Torsos einer Person angebracht werden kann.

**11.** Verfahren nach einem der Ansprüche 1 bis 10, wobei die Lagerungstemperatur weniger als -12 °C beträgt.

**12.** Verfahren nach Anspruch 11, wobei die Lagerungstemperatur im Bereich von -27 °C bis -15 °C liegt.

**13.** Verfahren nach einem der Ansprüche 1 bis 12, wobei der Schritt (i) das Lagern der Kassette (12) für eine Lagerungszeit von mindestens 2 Stunden in einem Gefriergerät, das bei oder unter der Lagerungstemperatur betrieben wird, umfasst.

**14.** Verfahren nach Anspruch 13, wobei die Lagerungszeit mindestens 4 Stunden beträgt.

**15.** Verfahren nach Anspruch 14, wobei die Lagerungszeit 6 bis 72 Stunden beträgt.

**Revendications**

**1.** Procédé pour la distribution de confiserie congelée à partir de récipients d'un distributeur portable (1), le distributeur comprenant :

• un logement thermiquement isolé (11) ; et
• une cassette (12) pour supporter des récipients (6), pouvant être reçue dans le logement thermiquement isolé (11) et adaptée pour délivrer des récipients individuels (6), dans lequel la cassette (12) comprend un cadre (13) et un ou plusieurs paquets de matériau de changement de phase (14) montés sur le cadre (13) ;

dans lequel le procédé comprend les étapes de :

(i) refroidissement de la cassette (12) à une température de stockage inférieure à -10°C ;

(ii) charge de la cassette (12) avec les récipients (6) ;

(iii) insertion de la cassette chargée à l'intérieur du logement (11) ; et

(iv) délivrance de récipients individuels (6) à partir de la cassette (12).

2. Procédé selon la revendication 1, dans lequel l'étape (ii) est réalisée avant l'étape (i) et la cassette chargée est refroidie à la température de stockage.

3. Procédé selon la revendication 1 ou revendication 2, dans lequel les un ou plusieurs paquets de matériau de changement de phase (14) sont montés de manière détachable sur le cadre (13).

4. Procédé selon l'une quelconque des revendications 1 à 3, dans lequel la cassette (12) comprend un mécanisme de cascade pour délivrer des récipients individuels (6) à une ou plusieurs ouvertures d'accès (5) disposées vers une base du logement (11).

5. Procédé selon la revendication 4, dans lequel le mécanisme de cascade comprend des guides pour guider les récipients (6) dans des trajectoires dans lesquelles chaque trajectoire s'étend jusqu'à une ouverture d'accès (5).

6. Procédé selon la revendication 5, dans lequel au moins une trajectoire interne et une trajectoire externe s'étendent jusqu'à chaque ouverture d'accès (5).

7. Procédé selon la revendication 6, dans lequel le mécanisme de cascade comprend au moins un mécanisme de capture (15) adapté pour interrompre une trajectoire externe lorsque dans une position fermée.

8. Procédé selon l'une quelconque des revendications 1 à 7, dans lequel le logement (11) est adapté pour être monté sur le dos d'une personne.

9. Procédé selon l'une quelconque des revendications 1 à 8, dans lequel les récipients (6) sont des cartouches à dose unique et le distributeur comprend de plus un dispositif de décharge (3) capable de supporter une cartouche à dose unique et de décharger une confiserie congelée de la cartouche.

10. Procédé selon la revendication 9, dans lequel le dispositif (3) est adapté pour être monté sur l'avant du torse d'une personne.

11. Procédé selon l'une quelconque des revendications 1 à 10, dans lequel la température de stockage est inférieure à -12°C.

12. Procédé selon la revendication 11, dans lequel la température de stockage se trouve dans l'intervalle de -27°C à -15°C.

13. Procédé selon l'une quelconque des revendications 1 à 12, dans lequel l'étape (i) comprend le stockage de la cassette (12) sur une durée de stockage d'au moins 2 heures dans un fonctionnement de congélateur à ou en-dessous de la température de stockage.

14. Procédé selon la revendication 13, dans lequel la durée de stockage est d'au moins 4 heures.

15. Procédé selon la revendication 14, dans lequel la durée de stockage est de 6 à 72 heures.

# Fig. 1

# Fig. 2

# Fig. 3

## Fig. 4a

## Fig. 4b

# Fig. 4c

# Fig. 4d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1386542 A1
- EP 1386542 A
- US 7810350 B2
- US 7810350 B